# EUROPÄISCHE PATENTSCHRIFT

(11) **EP 2 621 670 B1**
(45) Veröffentlichungstag und Bekanntmachung des Hinweises auf die Patenterteilung: **23.11.2016**
(21) Anmeldenummer: 11761636.7
(22) Anmeldetag: 28.09.2011
(51) Int. Cl.: B23Q 3/12, B23B 31/02, B23B 31/26

(54) **ANORDNUNG AUS EINER WERKZEUGMASCHINENSPINDEL UND EINEM DAZU KORRESPONDIERENDEN EINSATZ**
ARRANGEMENT COMPRISING A MACHINE TOOL SPINDLE AND AN INSERT CORRESPONDING THERETO
SYSTÈME COMPOSÉ D'UNE BROCHE DE MACHINE-OUTIL ET D'UN INSERT Y CORRESPONDANT

(30) Priorität: 08.11.2010 DE 102010043562; 29.09.2010 DE 102010041670
(43) Veröffentlichungstag der Anmeldung: 07.08.2013
(73) Patentinhaber: Fischbach Jürgen, 97469 Gochsheim (DE)
(72) Erfinder: TAUBER, Wolfgang, 97525 Schwebheim (DE); GEBERT, Karl, 97424 Schweinfurt (DE); FISCHBACH, Jürgen, 97469 Gochsheim (DE)
(74) Vertreter: Dr. Gassner & Partner mbB
(86) Internationale Anmeldenummer: PCT/EP2011/066928
(87) Internationale Veröffentlichungsnummer: WO 2012/041930

(56) Entgegenhaltungen:
- EP-A1- 1 728 573
- EP-A2- 1 943 050
- WO-A1-2004/089566
- DE-A1- 4 239 769
- DE-A1- 4 303 118
- DE-B3-102007 043 285
- DE-U1-202011 004 123
- US-A- 4 548 532
- US-A- 4 997 325

## Beschreibung

Die Erfindung betrifft eine Anordnung aus einer Werkzeugmaschinenspindel und einem dazu korrespondierenden Einsatz gemäß dem Oberbegriff des Anspruchs 1.

Eine herkömmliche Werkzeugmaschinenspindel ist an ihrem einen Ende als Schnittstelle zur Aufnahme eines Werkzeugspannsystems ausgebildet. Gängige Schnittstellen sind beispielsweise Hohlschaftkegel (HSK)-Schnittstellen oder Steilkegel (SK)-Schnittstellen.

Die nach dem Stand der Technik bekannten unterschiedlichen Schnittstellen bedingen eine grundsätzlich unterschiedliche Geometrie der Werkzeugmaschinenspindel. Infolgedessen müssen von Werkzeugmaschinenherstellern unterschiedlich ausgestaltete Werkzeugmaschinenspindeln, Spannsysteme, hydraulische Löseeinheiten und dgl. hergestellt und bevorratet werden. Das erfordert einen hohen Aufwand.

Die DE 199 61 451 A1 offenbart eine Auswuchtmaschine, bei der in einer Maschinenspindel ein Werkzeughalter eingespannt werden kann. Der Werkzeughalter weist einen Kupplungsschaft auf, welcher zur Zentrierung mit einer federnden Stützflächenanordnung versehen ist. Die durch die federnde Stützflächenanordnung bewirkte Zentrierung des Werkzeughalters ist nicht besonders genau. Die bekannte Anordnung eignet sich insbesondere nicht für schnelllaufende Werkzeugmaschinen.

Die DE 43 03 118 A1 offenbart eine Anordnung gemäß dem Oberbegriff des Anspruchs 1.

Aufgabe der Erfindung ist es, die Nachteile nach dem Stand der Technik zu beseitigen. Es soll insbesondere eine universelle, kostengünstige und exakte Anordnung aus einer Werkzeugmaschinenspindel und einem dazu korrespondierenden Einsatz angegeben werden. Nach einem weiteren Ziel der Erfindung soll die Anordnung so ausgestaltet sein, dass damit ein im Einsatz aufgenommenes Werkzeug auch bei hohen Drehzahlen sicher und zuverlässig zentrisch gehalten ist.

Diese Aufgabe wird durch die Merkmale des Patentanspruchs 1 gelöst. Zweckmäßige Ausgestaltungen der Erfindung ergeben sich aus den Merkmalen der Patentansprüche 2 bis 6.

Nach Maßgabe der Erfindung wird eine Anordnung aus einer Werkzeugmaschinenspindel, an deren ersten Ende eine im Wesentlichen zylindrisch ausgebildete Ausnehmung zum Einsetzen eines eine Schnittstelle bildenden, wechselbaren Einsatzes vorgesehen ist, und einem dazu korrespondierenden Einsatz vorgeschlagen, dessen Außendurchmesser abschnittsweise so bemessen ist, dass er mittels zumindest einer Pass- oder Schrumpfverbindung in der Ausnehmung befestigbar ist. Die Ausnehmung weist vorzugsweise einen kreis- oder ringförmigen Boden auf. Eine Ausnehmungstiefe erstreckt sich vom Boden der Ausnehmung bis zu einem gegenüberliegenden Öffnungsrand. Unter dem Begriff "im Wesentlichen zylindrisch ausgebildete Ausnehmung" wird eine Ausnehmung verstanden, die zumindest über 50%, vorzugsweise über zumindest 70%, besonders bevorzugt über zumindest 80%, der Ausnehmungstiefe hinweg zylindrisch ausgebildet ist.

Erfindungsgemäß weist ein mittlerer erster Abschnitt der Ausnehmung der Werkzeugmaschinenspindel einen ersten Innendurchmesser und ein bodenseitiger zweiter Abschnitt einen zweiten Innendurchmesser auf, welcher kleiner als der erste Innendurchmesser ist. Sowohl im ersten als auch im zweiten Abschnitt kann die Ausnehmung zweckmäßigerweise zylindrisch werden.

Erfindungsgemäß weist ein der Schnittstelle abgewandtes zweites Ende des Einsatzes einen zum zweiten Innendurchmesser korrespondierenden, die Herstellung einer ersten Pass- oder Schrumpfverbindung ermöglichenden ersten Außendurchmesser auf. Des Weiteren kann der Einsatz an einem schnittstellenseitigen ersten Ende einen zweiten Außendurchmesser aufweisen, welcher zu einem dritten Innendurchmesser der Ausnehmung korrespondiert, so dass in diesem Bereich eine zweite Pass- oder Schrumpfverbindung herstellbar ist. Die erste und zweite Pass- oder Schrumpfverbindung sind zweckmäßigerweise voneinander beabstandet. Ein Abstand zwischen den Pass- und Schrumpfverbindungen beträgt zumindest 60%, vorzugsweise 70%, besonders bevorzugt 80%, einer axialen Länge des Einsatzes.

Nach einer weiteren Ausgestaltung der Erfindung ist im Boden der Ausnehmung eine Eingriffsstruktur zum Eingriff in eine dazu korrespondierende weitere Eingriffsstruktur am Einsatz zur Herstellung einer drehfesten Verbindung mit dem Einsatz vorgesehen. Das Vorsehen einer Eingriffsstruktur am Boden der Ausnehmung vereinfacht die Herstellung und die Montage der Anordnung.

Die Eingriffsstruktur kann mehrere im Boden der Ausnehmung vorgesehene erste Bohrungen zur Aufnahme von Passstiften umfassen. Derartige Eingriffsstrukturen lassen sich einfach und kostengünstig herstellen.

Die Werkzeugmaschinenspindel kann auch als Hohlwelle ausgeführt sein. In diesem Fall ist der Boden der Ausnehmung zweckmäßigerweise in Form einer Ringfläche ausgebildet.

Eine im Einsatz gebildete weitere Ausnehmung bildet erfindungsgemäß einen Hohlschaftkegel(HSK)-Schnittstelle oder eine Steilkegel(SK)-Schnittstelle. - Bei der erfindungsgemäßen Anordnung kann der Einsatz in die Werkzeugmaschinenspindel eingeschrumpft oder eingepasst sein.

Damit ist es möglich, die Werkzeugmaschinenspindel stets in derselben Geometrie herzustellen. Es können also herstellerseitig Werkzeugmaschinen mit ein- und derselben Werkzeugmaschinenspindel ausgerüstet werden. Im Falle einer Kundenanforderung kann die Werkzeugmaschinenspindel sodann mit dem gewünschten Einsatz ausgerüstet und ausgeliefert werden. Dabei können die Einsätze so ausgestaltet sein, dass sie mit identischen Spannsystemen und/oder hydraulischen Löseeinheiten für die entsprechenden Spannwerkzeuge verwendet werden können. Das erspart weiteren Herstellungs- und Bevorratungsaufwand.

Nachfolgend werden bevorzugte Ausgestaltungen der Erfindung anhand der Zeichnungen näher erläutert. Es zeigen:
- Fig. 1: eine Schnittansicht einer Werkzeugmaschine mit einem ersten Einsatz,
- Fig. 2: eine Schnittansicht des ersten Einsatzes gemäß Fig. 1,
- Fig. 3: eine Schnittansicht der Werkzeugmaschine gemäß Fig. 1 mit einem zweiten Einsatz und
- Fig. 4: eine Schnittansicht des zweiten Einsatzes gemäß Fig. 3.

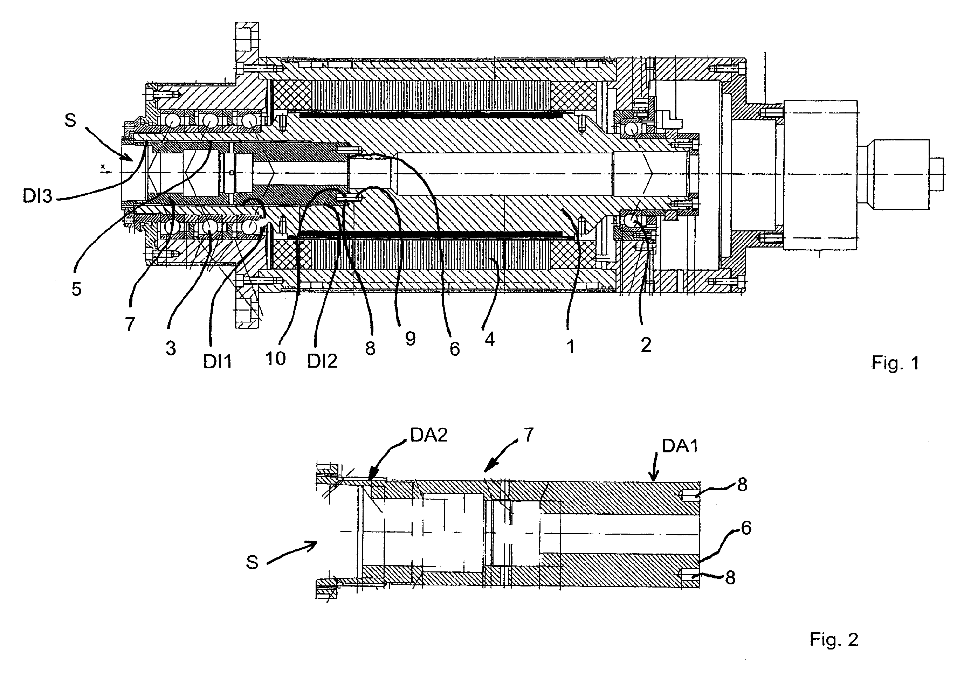

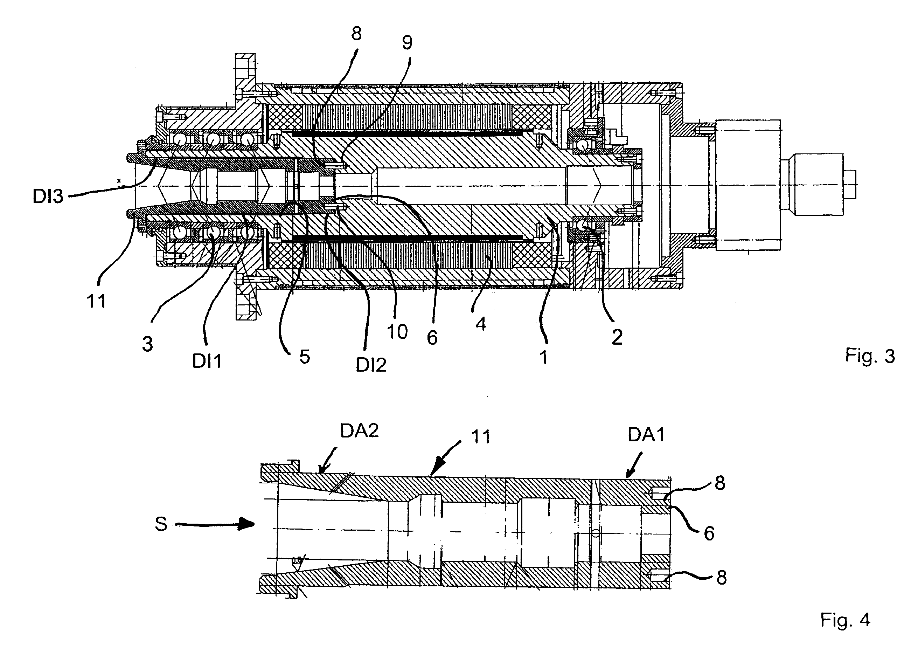

In den Fig. 1 und 3 ist eine Werkzeugmaschinenspindel 1 an ihrem ersten Ende in mehreren ersten Lagern 2 und an ihrem zweiten Ende in einem zweiten Lager 3 gehalten. Die Werkzeugmaschinenspindel 1 ist hier als Motorspindel eines Elektromotors ausgebildet. Mit dem Bezugszeichen 4 sind schematisch Blechpakete mit Spulen des Elektromotors angedeutet.

Am durch die ersten Lager 2 mehrfach gelagerten ersten Ende der Werkzeugmaschinenspindel 1 ist eine zylindrische Ausnehmung 5 vorgesehen. Die zylindrische Ausnehmung 5 weist in ihrem mittleren Abschnitt einen ersten Innendurchmesser DI1 und an ihrem bodenseitigen Ende einen zweiten Innendurchmesser DI2 auf, wobei der zweite Innendurchmesser DI2 geringfügig kleiner als der erste Innendurchmesser DI1 ist. Am öffnungsseitigen Ende der Ausnehmung 5 ist ein dritter Innendurchmesser DI3 vorgesehen, welcher kleiner als der erste Innendurchmesser DI1 ist.

Wie aus den Fig. 1 und 3 ersichtlich ist, ist die Werkzeugmaschinenspindel 1 hier als Hohlwelle ausgebildet. Infolgedessen ist ein Boden der Ausnehmung 5 hier als Ringfläche 6 ausgestaltet.

In die Ausnehmung 5 ist ein erster Einsatz 7 eingeschrumpft bzw. eingesetzt, welcher eine HSK-Schnittstelle bildet. Die Schnittstelle ist hier allgemein mit dem Bezugszeichen S bezeichnet. Eine erste Pass- bzw. Schrumpfverbindung ist im Bereich des zweiten Innendurchmessers DI2, eine zweite Pass- oder Schrumpfverbindung im Bereich des dritten Innendurchmessers DI3 der Werkzeugmaschinenspindel 1 vorgesehen.

In der Ringfläche 6 sind erste Bohrungen 9 vorgesehen, welche zu zweiten Bohrungen 8 korrespondieren, die an einem der Schnittstelle S gegenüberliegenden Ende des ersten Einsatzes 7 vorgesehen sind. In die ersten 8 und die zweiten Bohrungen 9 sind Passstifte 10 eingesteckt, welche die Funktion einer Mitnehmereinrichtung erfüllen und einen verdrehsicheren Halt des ersten Einsatzes 7 in der Ausnehmung 5 gewährleisten. Selbstverständlich kann die durch die ersten 8 und zweiten Bohrungen 9 sowie der Passstifte 10 bereitgestellte Funktion eines Mitnehmers auch anders ausgestaltet sein. Beispielsweise können in einer Umfangsfläche der Ausnehmung 5 ein Steg oder eine Nut vorgesehen sein, welche mit einer dazu korrespondierenden weiteren Nut oder einem weiteren Steg am Außenumfang des Einsatzes korrespondiert.

Fig. 2 zeigt eine Schnittansicht des ersten Einsatzes 7. Der erste Einsatz 7 ist nach Art einer Buchse ausgebildet, deren Öffnungsgeometrie am einen Ende eine HSK-Schnittstelle bildet. Ein erster Außendurchmesser DA1 des ersten Einsatzes 7 ist zumindest im Bereich des bodenseitigen Abschnitts so gewählt, dass der erste Einsatz 7 mit diesem Abschnitt in den Abschnitt der Ausnehmung 5, welche den zweiten Innendurchmesser DI2 aufweist, eingesetzt bzw. eingeschrumpft werden kann. In ähnlicher Weise weist der erste Einsatz an seinem schnittstellenseitigen Ende einen zweiten Außendurchmesser DA2 auf, welcher zum dritten Innendurchmesser DI3 korrespondiert. Auch in diesem Bereich kann eine Schrumpfverbindung herstellt werden.

In der Fig. 3 ist eine Werkzeugmaschinenspindel 1 gemäß Fig. 1 mit einem zweiten Einsatz 11 versehen. Der zweite Einsatz bildet eine SK-Schnittstelle. Auch der zweite Einsatz 11 weist an seinem bodenseitigen Endabschnitt zweite Bohrungen 8 auf, welche zu den ersten Bohrungen 9 in der Werkzeugmaschinenspindel 1 korrespondieren. Der bodenseitige Endabschnitt des zweiten Einsatzes 11 weist wiederum den ersten Außendurchmesser DA1 auf, so dass er zur Bildung einer ersten Pass- oder Schrumpfverbindung in dazu korrespondierenden Abschnitt der Ausnehmung 5, welche den zweiten Innendurchmesser DI2 aufweist, eingeschrumpft werden kann. Ein zweiter Außendurchmesser DA2 am schnittstellenseitigen Ende des zweiten Einsatzes 11 korrespondiert zum dritten Innendurchmesser DI3 der Ausnehmung 5, so dass auch hier eine zweite Pass- oder Schrumpfverbindung hergestellt werden kann.

Wegen der identischen Ausgestaltung der Werkzeugmaschinenspindel 1 kann die erfindungsgemäße Werkzeugmaschine vormontiert bereitgehalten werden. Je nach Kundenanforderung kann sie dann schnell und flexibel mit dem gewünschten ersten 7 oder zweiten Einsatz 11 ausgerüstet werden. Selbstverständlich ist es auch möglich, andersartig gestaltete Einsätze vorzusehen. Zweckmäßig ist es in jedem Fall, dass die Einsätze durch Einschrumpfen oder mittels einer Passverbindung in der Ausnehmung 5 befestigt werden. Ferner ist es zweckmäßig, zur drehsicheren Befestigung der Einsätze eine Mitnehmereinrichtung, beispielsweise die in den Figuren gezeigten Passstifte und Bohrungen, vorzusehen.

Die Einsätze können zweckmäßigerweise so ausgestaltet werden, dass unabhängig von der Wahl des Einsatzes jeweils identische Spannsysteme und/oder hydraulische Löseeinheiten für mit den Schnittstellen kombinierte Werkzeuge verwendet werden können.

Bei dem hier gezeigten Ausführungsbeispiel ist die Werkzeugmaschinenspindel als Motorspindel ausgeführt. Selbstverständlich kann es auch sein, dass die erfindungsgemäße Werkzeugmaschinenspindel 1 mittels eines Motors über ein Getriebe oder einen Riemen oder eine gekoppelt angetriebene Welle angetrieben wird.

Anstelle der in den Ausführungsbeispielen beschriebenen Schrumpfverbindung kann der Einsatz mit der Werkzeugmaschinenspindel auch mittels einer Passverbindung verbunden sein. Anstelle der in den Ausführungsbeispielen beschriebenen, aus den ersten und zweiten Bohrungen sowie den darin eingesetzten Passstiften gebildeten Mitnehmereinrichtung kann auch eine andersartige Mitnehmereinrichtung verwendet werden.

### Bezugszeichenliste

- 1: Werkzeugmaschinenspindel
- 2: erstes Lager
- 3: zweites Lager
- 4: Blechpaket mit Spule
- 5: Ausnehmung
- 6: Ringfläche
- 7: erster Einsatz
- 8: erste Bohrung
- 9: zweite Bohrung
- 10: Passstift
- 11: zweiter Einsatz

- S: Schnittstelle
- DI1: erster Innendurchmesser
- DI2: zweiter Innendurchmesser
- DI3: dritter Innendurchmesser
- DA1: erster Außendurchmesser
- DA2: zweiter Außendurchmesser

## Patentansprüche

1. Anordnung aus einer Werkzeugmaschinenspindel(1), an deren ersten Ende eine über zumindest über 50% ihrer Ausnehmungstiefe hinweg zylindrisch ausgebildete Ausnehmung (5) zum Einsetzen eines eine Schnittstelle (S) bildenden, wechselbaren Einsatzes (7, 11) vorgesehen ist, und einem dazu korrespondierenden, nach Art einer Buchse ausgebildeten Einsatz (7, 11), dessen Außendurchmesser (DA1) abschnittsweise so bemessen ist, dass er mittels zumindest einer Pass- oder Schrumpfverbindung in der Ausnehmung (5) befestigbar ist, wobei eine im Einsatz (7, 11) gebildete weitere Ausnehmung eine Hohlschaftkegel-Schnittstelle oder eine Steilkegel-Schnittstelle (S) bildet,
wobei ein mittlerer erster Abschnitt der Ausnehmung (5) der Werkzeugmaschinenspindel (1) einen ersten Innendurchmesser (DI1) und ein bodenseitiger zweiter Abschnitt einen zweiten Innendurchmesser (DI2) aufweist, welcher kleiner als der erste Innendurchmesser (DI1) ist, und an einem öffnungsseitigen Ende der Ausnehmung (5) ein dritter Innendurchmesser (DI3) vorgesehen ist, welcher kleiner als der erste Innendurchmesser (DI1) ist,
dadurch gekennzeochnet, dass ein der Schnittstelle (S) abgewandtes zweites Ende des Einsatzes (7, 11) einen zum zweiten Innendurchmesser (DI2) korrespondierenden, die Herstellung einer ersten Pass- oder Schrumpfverbindung ermöglichenden ersten Außendurchmesser (DA1) aufweist, und
dass der Einsatz (7, 11) an einem schnittstellenseitigen ersten Ende einen zweiten Außendurchmesser (DA2) aufweist, welcher zum dritten Innendurchmesser (DI3) der Ausnehmung korrespondiert, so dass in diesem Bereich eine zweite Pass- oder Schrumpfverbindung herstellbar ist.

2. Anordnung nach Anspruch 1, wobei in einem Boden (6) der Ausnehmung (5) eine Eingriffsstruktur zum Eingriff in eine dazu korrespondierende weitere Eingriffsstruktur am Einsatz (7, 11) zur Herstellung einer drehfesten Verbindung mit dem Einsatz (7, 11) vorgesehen ist.

3. Anordnung nach Anspruch 2, wobei die Eingriffsstruktur mehrere im Boden (6) der Ausnehmung (5) vorgesehene erste Bohrungen (9) zur Aufnahme von Passstiften (10) umfasst.

4. Anordnung nach Anspruch 3, wobei die weitere Eingriffsstruktur mehrere in einem weiteren Boden des Einsatzes (7, 11) vorgesehene zweite Bohrungen (8) zur Aufnahme der Passstifte (10) umfasst.

5. Anordnung nach einem der vorhergehenden Ansprüche, wobei die Werkzeugmaschinespindel (1) als Hohlwelle ausgebildet ist.

6. Werkzeugmaschine mit einer Anordnung nach einem der vorhergehenden Ansprüche.

## Claims

1. An arrangement comprising a machine tool spindle (1), on the first end of which a recess (5), which has a cylindrical design over at least 50% of the recess depth thereof, is provided for inserting an interchangeable insert (7, 11) forming an interface (S), and an insert (7, 11) corresponding thereto designed in the manner of a bushing, the outside diameter (DA1) of which is dimensioned in some sections so as to be attachable in the recess (5) by way of at least one close-tolerance or shrink joint, a further recess formed in the insert (7, 11) forming a hollow taper shank interface or a steep-angle taper interface (S),
a central first section of the recess (5) of the machine tool spindle (1) having a first inside diameter (DI1) and a bottom-side second section having a second inside diameter (DI2), which is smaller than the first inside diameter (DI1), and a third inside diameter (DI3), which is smaller than the first inside diameter (DI1), being provided on the opening-side end of the recess (5),
**characterized in that**
a second end of the insert (7, 11) facing away from the interface (S) has a first outside diameter (DA1) that corresponds to the second inside diameter (DI2) and allows a first close-tolerance or shrink joint to be established, and
the insert (7, 11), on an interface-side first end, has a second outside diameter (DA2), which corresponds to the third inside diameter (D13) of the recess, whereby a second close-tolerance or shrink joint can be established in this region.

2. The arrangement according to claim 1, wherein an engagement structure for engaging in a further engagement structure corresponding thereto on the insert (7, 11) for establishing a non-rotatable connection with the insert (7, 11) is provided in a bottom (6) of the recess (5).

3. The arrangement according to claim 2, wherein the engagement structure comprises a plurality of first boreholes (9) provided in the bottom (6) of the recess (5) for receiving dowel pins (10).

4. The arrangement according to claim 3, wherein the further engagement structure comprises a plurality of second boreholes (8) provided in a further bottom of the insert (7, 11) for receiving the dowel pins (10).

5. The arrangement according to any one of the preceding claims, wherein the machine tool spindle (1) is designed as a hollow shaft.

6. A machine tool comprising an arrangement according to any one of the preceding claims.

## Revendications

1. Système composé d'une broche de machine-outil (1) présentant à sa première extrémité un évidement (5) réalisé de manière cylindrique sur au moins plus de 50% de sa profondeur d'évidement, destiné à l'insertion d'un insert (7, 11) interchangeable, formant une interface (S), et un insert (7, 11) y correspondant, réalisé sous forme de douille, dont le diamètre extérieur (DA1) est mesuré par segment de sorte qu'il puisse être fixé au moyen d'au moins un assemblage par ajustage ou frettage dans l'évidement (5), en ce qu'un autre évidement formé dans l'insert (7, 11) forme une interface cône à queue creuse ou une interface (S) cône de forte conicité,
en ce qu'un premier segment moyen de l'évidement (5) de la broche de machine-outil (1) comporte un premier diamètre intérieur (DI1) et un deuxième segment côté fond un deuxième diamètre intérieur (DI2) qui est inférieur au premier diamètre intérieur (DI1), et présentant sur une extrémité côté ouverture de l'évidement (5) un troisième diamètre intérieur (DI3) qui est inférieur au premier diamètre intérieur (DI1),
**caractérisé en ce qu'**
une deuxième extrémité de l'insert (7, 11) opposée à l'interface (S) comporte un premier diamètre extérieur (DA1) permettant la réalisation d'un premier assemblage par ajustage ou frettage, correspondant au deuxième diamètre intérieur (DI2), et
**en ce que** l'insert (7, 11) comporte sur une première extrémité côté interface un deuxième diamètre extérieur (DA2) qui correspond au troisième diamètre intérieur (DI3) de l'évidement de manière à ce qu'un deuxième assemblage par ajustage ou frettage soit réalisable dans cette zone.

2. Système selon la revendication 1, en ce que dans un fond (6) de l'évidement (5) une structure de prise pour la prise dans une autre structure de prise y correspondante sur l'insert (7, 11) est prévue pour la réalisation d'un assemblage solidaire en rotation avec l'insert (7, 11).

3. Système selon la revendication 2, en ce que la structure de prise comprend plusieurs premiers alésages (9) prévus dans le fond (6) de l'évidement (5) pour la réception de goujons d'assemblage (10).

4. Système selon la revendication 3, en ce que l'autre structure de prise comprend plusieurs deuxièmes alésages (8) prévus dans un autre fond de l'insert (7, 11) pour la réception des goujons d'assemblage (10).

5. Système selon l'une des revendications précédentes, en ce que la broche de machine-outil (1) est réalisée sous forme d'arbre creux.

6. Machine-outil avec un système selon l'une des revendications précédentes.
